# EUROPÄISCHE PATENTSCHRIFT

(11) **EP 4 392 299 B1**
(45) Veröffentlichungstag und Bekanntmachung des Hinweises auf die Patenterteilung: **25.03.2026**
(21) Anmeldenummer: 22776869.4
(22) Anmeldetag: 01.08.2022
(51) Int. Cl.: B60T 13/26, B60T 13/68, B60T 17/22

(54) **VERFAHREN ZUM BETRIEB EINES FAHRZEUGGESPANNS**
PROCEDURE FOR OPERATING A VEHICLE TRAIN
PROCEDE D'OPERATION D'UN TRAIN DE VEHICULES

(30) Priorität: 24.08.2021 DE 102021121831
(43) Veröffentlichungstag der Anmeldung: 03.07.2024
(73) Patentinhaber: ZF CV Systems Europe BV, 1170 Brüssel (BE)
(72) Erfinder: ECKERT, Horst, 31547 Rehburg-Loccum (DE)
(74) Vertreter: Rabe, Dirk-Heinrich
(86) Internationale Anmeldenummer: PCT/EP2022/071545
(87) Internationale Veröffentlichungsnummer: WO 2023/025529

(56) Entgegenhaltungen:
- DE-A1- 102017 005 979
- US-A1- 2010 217 495
- US-A1- 2019 248 346

## Beschreibung

Die Erfindung betrifft ein Verfahren zum Betrieb eines Fahrzeuggespanns mit einem Zugfahrzeug und wenigstens einem Anhängefahrzeug mit Anti-Blockier-System gemäß dem Oberbegriff des Anspruchs 1.

Das Zugfahrzeug und das wenigstens eine Anhängefahrzeug des Fahrzeuggespanns weisen pneumatisch betätigbare Radbremsen an jedem Rad auf. Die Radbremsen dieser Betriebsbremsanlagen sind in ihrer Bremswirkung über den eingestellten Bremsdruck einstellbar. Die Zugfahrzeugbremsanlage weist eine elektronische Bremssteuereinheit auf welche das Bremsverhalten des Zugfahrzeugs oder des gesamten Fahrzeuggespanns überwacht. Die Bremssteuereinheit ist dazu ausgebildet, den jeweiligen Bremsdruck an den Radbremsen des Zugfahrzeugs sowie einen Anhängerbremsdruck einzustellen, mit dem eine Anhängerbremsanlage eines jeweiligen Anhängefahrzeugs in ihrer Bremswirkung gesteuert oder geregelt wird. Dabei verändert die Bremssteuereinheit den Bremsdruck und/oder den Anhängerbremsdruck bedarfsweise unabhängig von den Vorgaben eines Fahrers des Fahrzeuggespanns. Sie verwirklicht dabei ein Anti-Blockier-System (ABS) für das Zugfahrzeug, und übernimmt bei Vorliegen einer Blockierneigung bestimmter Räder die Einstellung des Bremsdrucks. Bei jeder Bremsung kann nämlich nur eine dem Fahrbahnreibwert entsprechende Bremskraft genutzt werden. Übersteigt die eingesteuerte Bremskraft die maximal übertragbare Bremskraft an einem oder mehreren Rädern, beginnen diese zu blockieren, wodurch das Fahrzeug instabil werden kann. Ein ABS-System überwacht permanent über Messsignale von Drehzahlsensoren die Drehzahl jedes Rades und ermittelt daraus den jeweiligen Bremsschlupf. Dies kann beispielsweise durch Vergleich der aus der Raddrehzahl ermittelten Radgeschwindigkeit mit einer aus mit allen Radgeschwindigkeiten des Fahrzeugs ermittelten Fahrzeugreferenzgeschwindigkeit erfolgen. Wird über den so ermittelten Bremsschlupf eine Blockierneigung des Rades erkannt, das heißt eine Schlupfgrenze ist erreicht oder überschritten, übernimmt die Bremssteuereinheit die Kontrolle über die Einstellung des Bremsdrucks. Dabei erfolgt in einem ersten Schritt eine Senkung des Bremsdrucks, um anschließend den Bremsdruck des betreffenden Rades entlang der Schlupfgrenze zu regeln. Das Bremsmoment wird solange wieder erhöht, bis ein dem Fahrbahnreibwert entsprechendes Bremsmoment erreicht wird. DE 10 2016 013 054 A1 offenbart ein Verfahren zum Einstellen von Bremsdrücken an pneumatisch betätigbaren Radbremsen eines Fahrzeuggespanns, wobei eine Zugfahrzeugbremsanlage eine Bremssteuereinheit und eine Anhängerbremsanlage ein separates Anti-Blockier-System mit einer eigenen Bremselektronik aufweist.

Bei dem bekannten Verfahren kommuniziert die Bremssteuereinheit der Zugfahrzeugbremsanlage mit der Bremselektronik der Anhängerbremsanlage und empfängt Information über den Bremsschlupf der jeweiligen Achseinheit des Anhängefahrzeugs. Ergibt die Bewertung des Bremsschlupfs einen Bremsbedarf am Anhängefahrzeug, so steuert die Bremssteuereinheit des Zugfahrzeugs einen entsprechenden Anhänger-Bremsdruck aus, welcher dem Anhängefahrzeug an einem Anhängerkontrollventil des Zugfahrzeugs zur Verfügung gestellt wird.

DE 10 2016 012 925 A1 offenbart ein weiteres Verfahren, bei dem die Bremssteuereinheit der Zugfahrzeugbremsanlage mit einer Bremselektronik der Anhängerbremsanlage zum Empfang von Bremsschlupfinformationen kommuniziert. Betätigt der Fahrer das Bremspedal und damit das Betriebsbremsventil, erfasst die Bremssteuereinheit der Zugfahrzeugbremsanlage die vom Fahrer bestimmte Soll-Verzögerung und auch die augenblickliche Ist-Verzögerung des Fahrzeuggespanns. Die Ist-Verzögerung des Fahrzeuggespanns wird durch koordinierte Betätigung der Betriebsbremsanlagen, das heißt der Zugfahrzeugbremsanlage und der Anhängerbremsanlage, der Soll-Verzögerung nachgeführt.

Die US2019248346A1 offenbart ein Verfahren zum elektronischen Steuern einer Bremsanlage mit zwei Bremssystemen in einem automatisiert steuerbaren FahrzeugGespann mit mindestens den folgenden Schritten, Einlesen eines Anforderungs-Signals zum automatisierten elektronischen Ansteuern von Betriebsbremsen in einem Zugfahrzeug-Bremssystem eines Zugfahrzeuges und/oder eines Anhänger-Bremssystems eines Anhängers des Fahrzeug-Gespanns, wobei über das Anforderungs-Signal eine von den jeweiligen Betriebsbremsen auszusteuernde, automatisiert angeforderte Fahrzeug-Soll-Beschleunigung und/oder eine automatisiert angeforderte Fahrzeug-Soll-Geschwindigkeit übertragen werden, Überwachen und Plausibilisieren des Anforderungs-Signals zum Feststellen, ob die automatisiert angeforderte Fahrzeug-Soll-Beschleunigung und/oder die automatisiert angeforderte Fahrzeug-Soll-Geschwindigkeit von den jeweiligen Betriebsbremsen vollständig oder fehlerfrei ausgesteuert werden oder werden können, Ausgeben eines Anhänger-Redundanz-Steuersignals an das Anhänger-Bremssystem, falls eine Aussteuerung der automatisiert angeforderten Fahrzeug-Soll-Beschleunigung und/oder der automatisiert angeforderten Fahrzeug-Soll-Geschwindigkeit nicht vollständig oder fehlerfrei erfolgt ist oder erfolgen kann.

Während der Fahrt des Fahrzeuggespanns können elektrische, elektronische oder mechanische Fehler an einem Rad, einer Bremse oder anderen für die Fahrsicherheit des Fahrzeugs relevanten Fahrzeugkomponenten oder -systemen auftreten. Bemerkt der Fahrer den Fehler und/oder die damit verbundenen Einschränkungen der Funktionsfähigkeit der betroffenen Fahrzeugkomponente nicht, so könnte davon bei einer unveränderten, gleichbleibenden Weiterfahrt des

Fahrzeuggespanns eine erhebliche Gefahr für die Fahrsicherheit des Fahrzeuggespanns und/oder anderer Verkehrsteilnehmer ausgehen.

Der vorliegenden Erfindung liegt die Aufgabe zugrunde, die Fahrsicherheit des Fahrzeugs für den Fall der Einschränkung der Funktionsfähigkeit von Fahrzeugkomponenten des Fahrzeuggespanns zu verbessern.

Diese Aufgabe wird erfindungsgemäß durch ein Verfahren mit den Merkmalen das Anspruchs 1 gelöst.

Gemäß der Erfindung ist vorgesehen, dass mindestens eine Fahrzeugkomponente des Zugfahrzeugs und/oder des Anhängefahrzeugs, welche als relevant für die Fahrsicherheit des Fahrzeugs und damit auch des Fahrzeuggespanns bestimmt ist, hinsichtlich ihrer Funktionsfähigkeit überwacht wird und die Bremssteuereinheit der Zugfahrzeugbremsanlage im Fall der Detektion einer Einschränkung der Funktionsfähigkeit einer Fahrzeugkomponente das Fahrzeuggespann über eine Anhängerbremsanlage 4 des Anhängefahrzeugs 6 verzögert. Bei Auftreten einer für die Fahrsicherheit des Fahrzeugs relevanten Einschränkung der Funktionsfähigkeit einer Fahrzeugkomponente veranlasst die Bremssteuereinheit des Zugfahrzeugs unabhängig vom Fahrverhalten des Fahrers eine Verzögerung des Anhängefahrzeugs, um die Geschwindigkeit des Fahrzeuggespanns zu verringern. Das Bremsen des Anhängefahrzeugs (und nicht des im Fahrzeuggespann vorausfahrenden Zugfahrzeugs) hat den Vorteil, dass das Fahrzeuggespann beim Verzögerungsvorgang gestreckt wird. Außerdem wird ausgeschlossen, dass die Fahrsicherheit des Fahrzeugs bei einer Einschränkung der Funktionsfähigkeit einer Fahrzeugkomponente des Zugfahrzeugs durch eine Einleitung einer Bremsung zur Verzögerung des Fahrzeugs durch Aktivierungen sowohl der Bremsanlage des Zugfahrzeugs als auch der des zumindest einen Anhängefahrzeugs möglicherweise noch weiter negativ beeinträchtigt wird.

Die Erfindung betrifft sowohl Fahrzeuggespanne mit über Deichseln gezogenen Anhängefahrzeugen als auch Sattelzüge, bei denen ein Zugfahrzeug den Sattelauflieger zieht.

Die Verzögerung des Fahrzeuggespanns erfolgt vorteilhaft dadurch, dass die Bremssteuereinheit der Zugfahrzeugbremsanlage einen Anhängerbremsdruck einstellt, mit dem die Anhängerbremsanlage des Anhängefahrzeugs in ihrer Bremswirkung gesteuert oder geregelt wird.

Bei einem Fahrzeuggespann mit elektronischem Bremssystem (EBS) fordert die Bremssteuereinheit des Zugfahrzeuges eine Bremselektronik eines Anhängefahrzeuges durch eine Botschaft mit fortlaufend aktualisiertem Botschaftsinhalt dazu auf, das Anhängefahrzeug der Botschaft entsprechend einzubremsen.

In einer bevorzugten Ausführungsform der Erfindung regelt die Bremssteuereinheit nach Detektion einer Funktionseinschränkung einer Fahrzeugkomponente eine für diesen Fall ermittelte oder vorgegebene Maximalgeschwindigkeit des Fahrzeugs über Einstellung des Anhängerbremsdrucks ein. Mit anderen Worten ist der einstellbare Anhängerbremsdruck die Stellgröße in einem Regelkreis, dessen Regelgröße die Fahrgeschwindigkeit des Fahrzeuggespanns ist. Durch Beeinflussung des Anhängerbremsdrucks wird auf die Fahrgeschwindigkeit des Fahrzeuggespanns derart Einfluss genommen, dass sich die Fahrgeschwindigkeit der ermittelten oder vorgegebenen Maximalgeschwindigkeit angleicht, das heißt sich die gegenüber der aktuellen Fahrgeschwindigkeit verringerte Maximalgeschwindigkeit einstellt.

Der Wert der Maximalgeschwindigkeit, die über den Anhängerbremsdruck eingeregelt wird, ist dabei der Qualität der jeweils betroffenen Fahrzeugkomponente und/oder dem Grad der Beeinträchtigung der Funktionsfähigkeit angepasst. Dabei kann eine Verringerung der Fahrgeschwindigkeit bis zum Stillstand vorgesehen sein oder auf eine -gegebenenfalls laufend aktualisierte- Maximalgeschwindigkeit. In eine Ermittlung der Maximalgeschwindigkeit können neben Vorgaben zu typischerweise auftretenden Fehlern auch die aktuellen Fahranforderungen des Fahrers berücksichtigt werden, nämlich ein Beschleunigungs- oder Bremswunsch des Fahrers.

Die Regelung der Fahrgeschwindigkeit auf eine Maximalgeschwindigkeit ist vorteilhaft vom Fahrer aktivierbar, sodass der Fahrer die Entscheidung treffen kann, die Fahrt mit reduzierter Fahrgeschwindigkeit wenigstens vorübergehend fortzusetzen. Eine entsprechende Betätigungseinrichtung zur Aktivierung der Regelung auf die Maximalgeschwindigkeit ist im Bereich des Fahrerplatzes angeordnet. Vorteilhaft ist die Regelung der Fahrgeschwindigkeit auf eine Maximalgeschwindigkeit durch Betätigung des Fahrpedals aktivierbar, sodass zur Aktivierung der Regelung auf eine bereits vorhandene Einrichtung zurückgegriffen werden kann. Betätigt der Fahrer das Fahrpedal beispielsweise bis zum Vollanschlag, wird das Fahrzeuggespann nicht zum Stillstand gebracht, sondern auf eine bestimmte Maximalgeschwindigkeit geregelt, deren Höhe auf die detektierte Funktionseinschränkung beziehungsweise den detektierten Fehler und/oder erkannten Fahrsituation angepasst ist.

In einer vorteilhaften Weiterbildung der Erfindung kann die Maximalgeschwindigkeit durch -gegebenenfalls wiederholte- Betätigung des Fahrpedals erhöht werden, so dass dem Fahrer nach seiner Einschätzung der Gefährdungssituation höhere Fahrgeschwindigkeiten nach seiner Wahl zur Verfügung stehen. Betätigt der Fahrer das Fahrpedal in kurzer Folge mehrfach nacheinander beispielsweise bis zum Vollanschlag, der die Aktivierung der Regelung der Fahrgeschwindigkeit indiziert, wird davon abhängig die Sollgröße (Maximalgeschwindigkeit) vom Fahrer gewählt und über den Anhängerbremsdruck eingeregelt.

Sobald die Regelung des Anhängerbremsdrucks begonnen hat und wirksam Bremsdruck an der Anhängerbremsanlage bereitgestellt ist, wird vorteilhaft von der Steuereinheit an ein Motorsteuergerät ein Informationssignal herausgegeben mit der Botschaft, dass der Motor kein Antriebsmoment mehr erzeugen soll.

Vorteilhaft werden zur Detektion einer Funktionseinschränkung einer Fahrzeugkomponente die Drehzahlen der Räder überwacht. Für die erforderliche Information sind keine zusätzlichen Messeinrichtungen erforderlich, wenn die betreffenden Teilfahrzeuge des Fahrzeuggespanns mit Anti-Blockier-Systemen ausgestattet sind. Zur Detektion der Funktionsfähigkeit des jeweiligen Rades werden dabei die vom Anti-Blockier-System erfassten Messwerte zu seiner Drehzahl herangezogen. Diese Ausführungsform der Erfindung ist daher besonders vorteilhaft bei Fahrzeuggespannen mit Anhängefahrzeugen, die mit einem eigenen Antiblockiersystem ausgestattet sind. Dabei stellt das Anti-Blockier-System des Anhängefahrzeugs -insbesondere dessen Bremselektronik- die zur erfindungsgemäßen Überwachung der Funktionsfähigkeit der Fahrzeugkomponenten gewünschte Information zu Raddrehzahlen zur Verfügung.

Aus einem auffälligen Wert der Drehzahl eines Rades, das heißt im Vergleich zu anderen Rädern des Fahrzeugs auffälligen Drehzahl, kann bei Hinzutreten bestimmter Begleitumstände auf eine bestimmte Funktionsbeeinträchtigung geschlossen werden. So weist beispielsweise bei einer ungebremsten Fahrt des Fahrzeugs die Verringerung einer Raddrehzahl auf die Behinderung des freien Drehens des Rades hin, was ein Indiz für permanent schleifende Bremsbeläge der Bremse oder ein andersartig eingetretener Schaden von Bremsenbauteilen des Rades ist. Insbesondere bei einem permanenten Schleifen der Bremsbeläge besteht die Gefahr einer -oft sehr schnell eintretenden- bremsenschädigenden Überhitzung von Bremsenbauteilen. Die erfindungsgemäße Verringerung der Fahrgeschwindigkeit durch eine Einstellung beziehungsweise Erhöhung des Anhängerbremsdrucks und anschließender Regelung der Fahrgeschwindigkeit auf eine Maximalgeschwindigkeit wirkt dabei vom Fahrer unbemerktem Eintritt von Beschädigungen entgegen.

Bei einer gebremsten Fahrt des Fahrzeugs ist ein Rad durch seine gemessene Drehzahl dadurch auffällig, dass die Drehzahl keinen oder nur einen sehr geringen Bremsschlupf des Rades zeigt, d. h. das Rad nicht oder nur abnorm gering entsprechend der Soll-Verzögerung an der Arbeit zur Verzögerung des Fahrzeugs beiträgt. Dieses Verhalten ist ein Indiz dafür, dass eine Funktionsstörung einer Komponente der Radbremse zwischen Druckeinspeisung in den Bremszylinder und den Bremsenbauteilen Bremsreibfläche/Bremsbelag der Bremse vorliegt, beispielsweise eine gebrochene Bremsleitung. Insbesondere dann, wenn die auffällige Drehzahl bei einem Rad (oder beiden Rädern) der Vorderachse auftritt, stellt dieses eine fahrsicherheitskritische Funktionsstörung dar. Nach Detektion der Funktionsstörung verringert die Bremssteuereinheit der Zugfahrzeugbremsanlage automatisch die Fahrgeschwindigkeit des Fahrzeuggespanns unabhängig vom Fahrverhalten des Fahrers durch entsprechende Einstellung des Anhängerbremsdrucks auf die für diese Funktionseinschränkung vorgesehene Maximalgeschwindigkeit.

Ist ein Rad des Fahrzeuggespanns dauerhaft, oder mehrmals zyklisch in kurzer Folge auftretend, blockiert, ohne dass der Fahrer oder ein externes Bremssystem (Fahrerassistenzsystem) eine Bremsung durchführt, so kann die Überwachung der Funktionsfähigkeit auf eine Einschränkung durch einen mechanischen Fehler schließen. Beispielsweise ist dann bei Trommelbremsen oft der die Bremsbacken an die Bremstrommel spreizende S-Nocken der Bremswelle aufgrund einer fehlerhaften Nachstellung des Lüftspiels zwischen Bremstrommel und Bremsbacken übergeschlagen.

Eine deutliche Behinderung eines Rades, was durch Überwachung der Raddrehzahl detektiert wird, kann auch einen plötzlich eingetretenen Lagerschaden indizieren.

In einer weiteren vorteilhaften Ausführungsform der Erfindung wird zur Detektion einer Funktionseinschränkung einer Fahrzeugkomponente der Reifendruck von Fahrzeugrädern überwacht. Wird bei der Überwachung des Reifendrucks ein plötzlicher oder schnell fallender Reifendruck festgestellt, so wird dies als für die Fahrsicherheit des Fahrzeuggespanns gefährlicher Zustand bewertet und eine erfindungsgemäße Verzögerung des Fahrzeuggespanns eingeleitet. Dies ist insbesondere dann vorteilhaft, wenn das vom detektierten Druckverlust betroffene Rad ein gelenktes Rad ist, in der Regel ein Vorderrad. Durch die Abbremsung des Fahrzeuggespanns über ein Anhängefahrzeug wird das Fahrzeuggespann gestreckt und das voranfahrende Zugfahrzeug bleibt lenkbar.

In einer weiteren vorteilhaften Ausführungsform der Erfindung wird zur Detektion einer Funktionseinschränkung einer Fahrzeugkomponente die Funktionsfähigkeit elektrischer Verbindungen zwischen Zugfahrzeug und Anhängefahrzeug überwacht. Bei Störung oder Unterbrechung der elektrischen Verbindung, die oft nicht vom Fahrer bemerkt werden kann, wird selbsttätig der Anhängerbremsdruck erhöht und das Anhängefahrzeug verzögert, wobei der Fahrer auch durch die selbsttätige Verzögerung auf die Detektion einer Funktionseinschränkung aufmerksam gemacht wird.

Vorteilhaft werden zur Detektion einer Funktionseinschränkung einer Fahrzeugkomponente die Funktionsfähigkeiten von Achsfederungen überwacht. Dabei können durch Auswertung des Messsignals eines Achslastsensors Beschädigungen der Federelemente, beispielsweise einer Blattfeder, indirekt erkannt werden. Im Fall einer luftgefederten Achse wird beispielsweise die Funktionsfähigkeit des pneumatischen Tragbalgs überwacht. Durch Auswertung des Messsignals eines Drucksensors des Tragbalgs werden vorgegebene Situationen erkannt, denen eine Einschränkung der Funktionsfähigkeit zugewiesen ist und daher die Bremssteuereinheit der Zugfahrzeugbremsanlage gemäß der Erfindung das Fahrzeuggespann durch entsprechende Einstellung des Anhängerbremsdrucks verzögert.

In einer weiteren vorteilhaften Ausführungsform der Erfindung wird zur Detektion einer Funktionseinschränkung einer Fahrzeugkomponente die Funktionsfähigkeit des Lenkungssystems des Zugfahrzeugs überwacht. Wird durch eine Auswertung der Messsignale der Drehzahlsensoren der Räder des Zugfahrzeugs, insbesondere die der Vorderachse (Lenkachse) des Zugfahrzeugs, des Messsignals eines Lenkradwinkelsensors (LWS), der Messsignale von Achslastsensoren der Vorderachse und/oder eines Signales eines Spurhalteassistenzsystemes (LDW, LDWS, AFIL, LKAS) eine für die Fahrsicherheit des Fahrzeugs erhebliche Funktionseinschränkung ermittelt, wird gemäß der Erfindung das Fahrzeuggespann durch eine entsprechende Einstellung des Anhängerbremsdrucks und Bestimmung einer Maximalgeschwindigkeit mit anschließend erfolgender Regelung der Fahrgeschwindigkeit auf die Maximalgeschwindigkeit verzögert.

In einer weiteren vorteilhaften Ausführungsform der Erfindung wird zur Detektion einer Funktionseinschränkung einer Fahrzeugkomponente die Funktionsfähigkeit der Radbremsen (Reibungsbremsen) des Zugfahrzeugs überwacht. In die Überwachung zur Detektion von Schäden an den Radbremsen des Zugfahrzeugs werden eine Auswertung der Messsignale der Drehzahlsensoren der Räder des Zugfahrzeugs sowie Informationen zur Masse des Zugfahrzeugs und des Anhängefahrzeugs und/oder der vom Fahrer bestimmten Soll-Verzögerung herangezogen. Die Masse des Zugfahrzeugs kann beispielsweise über Achslastsensoren des Zugfahrzeugs ermittelt werden und die Masse des Anhängefahrzeugs indirekt über Ermittlungen der Masse des Fahrzeuggespanns und der Masse des Zugfahrzeugs, wobei von der ermittelten Masse des Fahrzeuggespanns die Masse des Zugfahrzeugs in Abzug gebracht wird. Die Masse des Fahrzeuggespanns wird ermittelt aus von einem Motorsteuergerät bezogenen, von dieser während Phasen von positiver Beschleunigung des Fahrzeugs ermittelten Daten über die Antriebsleistung des Fahrzeugs (Fahrzeuggespanns) und zeitgleich erfasster Fahrzeuggeschwindigkeitsdaten. Wird dabei ermittelt, dass bei einer Fahrt mit hoher Auslastung (Beladung) des Zugfahrzeugs und nicht voll ausgelastetem Anhängefahrzeug die das Fahrzeuggespann verzögernde Bremswirkung der Radbremsen des Zugfahrzeugs in Abhängigkeit der vom Fahrer vorgegeben Soll-Verzögerung schnell zunehmend abnimmt, wird gemäß der Erfindung das Fahrzeuggespann durch eine entsprechende Einstellung des Anhängerbremsdrucks und Bestimmung einer Maximalgeschwindigkeit mit anschließend erfolgender Regelung der Fahrgeschwindigkeit auf die Maximalgeschwindigkeit verzögert. Auf diese Weise wird dem so genannten Bremsenfading entgegengewirkt, wobei nach unmittelbar zurückliegender hoher Umsetzung von kinetischer Energie in Wärmeenergie durch die Radbremsen, beispielsweise nach länger andauernder Bergabfahrt und/oder mehreren stärkeren Bremsungen aus höheren Fahrgeschwindigkeiten heraus in Folge, eine für die Fahrsicherheit des Fahrzeugs erhebliche Funktionseinschränkung der Radbremsen vorliegt.

Ein Ausführungsbeispiel der Erfindung ist nachstehend anhand der Zeichnung näher erläutert. Es zeigen:
- Fig. 1: ein pneumatisches und elektrisches Schema der Bremsanlagen eines Fahrzeuggespanns mit Zugfahrzeug und Anhängefahrzeug,
- Fig. 2: ein Flussschaubild eines Ausführungsbeispiels eines Verfahrens zum Betrieb des Fahrzeuggespanns gemäß Fig. 1.

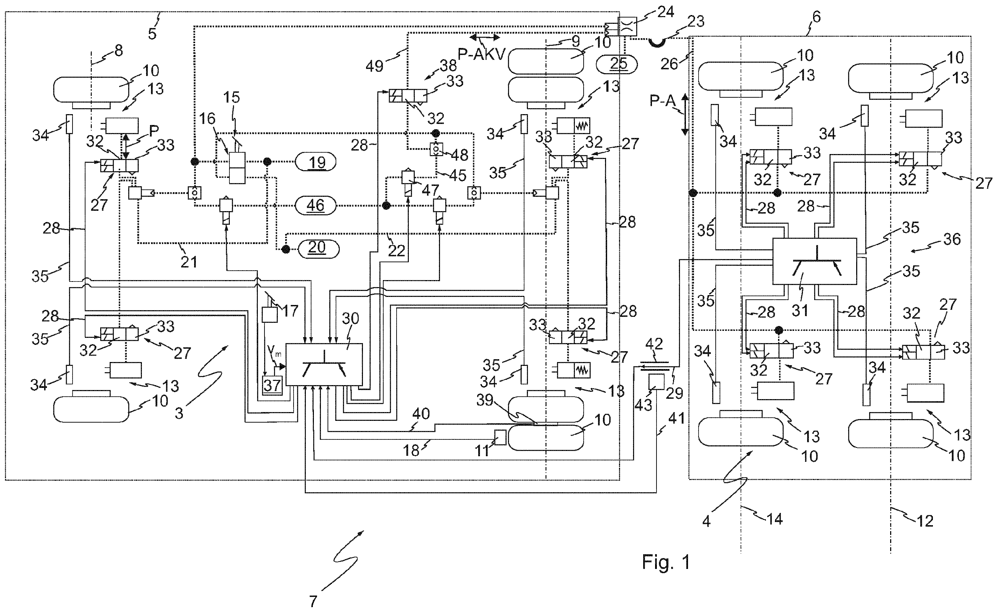

Fig. 1 zeigt einen elektrisch-pneumatischen Plan der Bremsanlagen eines Fahrzeuggespanns, nämlich der Zugfahrzeugbremsanlage 3 eines Zugfahrzeugs 5 des Fahrzeuggespanns 7 und einer Anhängerbremsanlage 4 eines Anhängefahrzeugs 6. Elektrische Leitungen sind in dem Plan mit Volllinien und pneumatische Leitungen mit punktierten Linien dargestellt. Das Zugfahrzeug 5 umfasst im gezeigten Ausführungsbeispiel zwei Achsen 8, 9, an denen jeweils beidseitig Räder 10 angeordnet sind. Das Anhängefahrzeug 6 weist ebenfalls zwei Anhängerachsen 12, 14 mit jeweils Rädern 10 auf. Zum Abbremsen der Räder 10 ist jedem Rad 10 eine pneumatisch betätigbare Radbremse 13 zugeordnet, welche Teile der jeweiligen Betriebsbremsanlage eines Fahrzeugs des Fahrzeuggespanns 7 sind.

In der Fahrerkabine des Zugfahrzeugs 5 ist ein Fahrpedal 17 und ein Bremspedal 15 angeordnet, welches an ein Betriebsbremsventil 16 gekoppelt ist. Der Fahrer des Zugfahrzeugs 5 kann durch Betätigen des Bremspedals 15 pneumatische Bremsleitungen zwischen Druckmittelvorräten 19, 20 und den Radbremsen 13 öffnen. Über das Fahrpedal 17 stellt der Fahrer die Fahrgeschwindigkeit des Fahrzeuggespanns 7 ein.

Im gezeigten Ausführungsbeispiel sind die Radbremsen 13 der Vorderachse 8 des Zugfahrzeugs 5 einem gemeinsamen ersten Bremskreis 21 zugeordnet, während die Radbremsen 13 der Hinterachse 9 über einen zweiten Bremskreis 22 betätigbar sind. Der erste Druckmittelvorrat 19 ist dabei dem ersten Bremskreis 21 zugeordnet. Der zweite Bremskreis 22 der Hinterachse 9 wird über einen zweiten Druckmittelvorrat 20 mit Druckmittel versorgt. Der zweite Bremskreis 22 ist analog dem ersten Bremskreis 21 aufgebaut.

Sowohl in der Zugfahrzeugbremsanlage 3 als auch in der Anhängerbremsanlage 4 ist jeder Radbremse 13 ein Drucksteuerventil 27 vorgeschaltet, welches jeweils elektrisch ansteuerbar ist. Zum Empfang von Steuersignalen 28 sind die Drucksteuerventile 27 der Zugfahrzeugbremsanlage 3 mit einer Bremssteuereinheit 30 verbunden. Die Drucksteuerventile 27 der Anhängerbremsanlage 4 sind mit einer Bremselektronik 31 verbunden. Die Drucksteuerventile 27 sind jeweils eine Kombination von wenigstens zwei Magnetventilen, nämlich einem Einlassventil 32 und einem Auslassventil 33. Das Einlassventil 32 dient dabei prinzipiell zur Bremsdruckerhöhung beziehungsweise durch ein Schließen zum Halten des Bremsdrucks P einer Radbremse 13 eines Rades 10, während das Auslassventil 33 zur Reduzierung des Bremsdrucks P geöffnet wird und den jeweils radseitig angeschlossenen Bremszylinder der Radbremse 13 eines Rades 10 entlüftet. Das Einlassventil 32 und das Auslassventil 33 der Drucksteuerventile 27 sind vorzugsweise 2/2-Wege Ventile.

Die Bremssteuereinheit 30 und die Bremselektronik 31 sind dazu ausgebildet und vorgesehen, bedarfsweise den Bremsdruck im jeweiligen Teilfahrzeug des Fahrzeuggespanns 7 zu beeinflussen. Hierzu wird das Drehverhalten der jeweiligen Räder 10 überwacht. Jedem Rad 10 des Zugfahrzeugs 5 und jedem Rad 10 des Anhängefahrzeugs 6 ist dabei ein Drehzahlsensor 34 zugeordnet, welcher Messsignale 35 mit Aussage über das Drehverhalten des jeweiligen Rades 10 erzeugt. Die Drehzahlsensoren 34 der Zugfahrzeugbremsanlage 3 sind mit der Bremssteuereinheit 30 verbunden und die Drehzahlsensoren 34 der Anhängerbremsanlage 4 mit der Bremselektronik 31. Die Bremssteuereinheit 30 und die Bremselektronik 31 werten die Messsignale 35 der jeweils angeschlossenen Drehzahlsensoren 34 aus.

Die Bremselektronik 31, die Drehzahlsensoren 34 und die Drucksteuerventile 27 der Anhängerbremsanlage 4 sind die wesentlichen Elemente eines Anti-Blockier-Systems 36 des Anhängefahrzeugs 6. Unabhängig von einer Antiblockierfunktion (ABS) der Bremssteuereinheit 30 des Zugfahrzeugs 5 überwacht die Bremselektronik 31 über die Drehzahlsensoren 34 beziehungsweise die Auswertung deren Messsignale 35 die Blockierneigung der einzelnen Räder 10 des Anhängefahrzeugs 6. Bei Feststellen einer Blockierneigung eines Rades 10 wirkt die Bremselektronik 31 durch Ansteuerung eines oder mehrerer Drucksteuerventile 27 und Regelung der an den Radbremsen anliegenden Bremsdrücke entlang der Schlupfgrenze einem Blockieren der Räder 10 entgegen.

Die Zugfahrzeugbremsanlage 3 umfasst einen Kupplungskopf 23, an den die Anhängerbremsanlage 4 des Anhängefahrzeugs 6 ankuppelbar ist. Über den Kupplungskopf 23 stellt die Zugfahrzeugbremsanlage 3 einen pneumatischen Anhängerbremsdruck P-A für die Anhängerbremsanlage 4 bereit. Dabei ist dem Kupplungskopf 23 ein Anhänger-Kontrollventil 24 zugeordnet, welches die Verbindung zwischen einem dritten Druckmittelvorrat 25 und dem pneumatischen Kupplungskopf 23 beherrscht. Die Anhängerbremsanlage 4 weist einen Anhängerbremskreis 26 auf, in dem der Anhängerbremsdruck P-A herrscht und zu allen Radbremsen 13 der Anhängerbremsanlage 4 durchschaltbar ist. Die Betätigung des Anhänger-Kontrollventils 24 erfolgt durch eine Betätigung des Betriebsbremsventiles 16 mittels des Bremspedales 15 durch den Fahrer oder obliegt unabhängig von einer Betätigung des Betriebsbremsventiles 16 durch den Fahrer der Bremssteuereinheit 30 der Zugfahrzeugbremsanlage 3. Hierzu weist die Zugfahrzeugbremsanlage 3 ein von der Bremssteuereinheit 30 der Zugfahrzeugbremsanlage 3 ansteuerbares Anhänger-Drucksteuerventil 38 auf, welches analog den der Radbremsen 13 vorgeschalteten Drucksteuerventilen 27 aufgebaut ist. Das Einlassventil 32 und das Auslassventil 33 des Anhänger-Drucksteuerventils 38 werden von der Bremssteuereinheit 30 der Zugfahrzeugbremsanlage 3 angesteuert. Hierzu verfügt die Zugfahrzeugbremsanlage 3 über einen vierten Bremskreis 45 mit einem separaten vierten Druckmittelvorrat 46. Der vierte Bremskreis 45 weist ein 3/2-Wegeventil 47, ein Doppelrückschlagventil 48 und ein Anhänger-Drucksteuerventil 38 auf, welches analog den Drucksteuerventilen 27 der Radbremsen 13 aufgebaut ist und deren Einlassventil 32 und Auslassventil 33 von der Bremssteuereinheit 30 der Zugfahrzeugbremsanlage 3 mit Steuersignalen 28 angesteuert werden. Durch die Steuersignale 28 wird in der Bremsdruckleitung 49 zum Anhänger-Kontrollventil 24 ein Steuerbremsdruck P-AKV bewirkt, durch den vom Anhänger-Kontrollventil 24 bewirkt der Anhängerbremsanlage 4 des Anhängefahrzeugs 6 ein Anhängerbremsdruck P-A zur Verfügung gestellt wird.

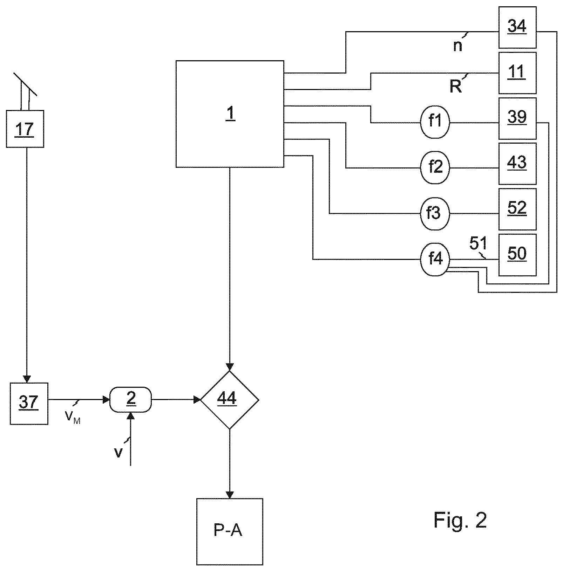

Wie nachstehend anhand von Fig. 2 noch näher erläutert ist, werden Fahrzeugkomponenten des Zugfahrzeugs 5 und des Anhängefahrzeugs 6, welche als relevant für die Fahrsicherheit bestimmt sind, hinsichtlich ihrer Funktionsfähigkeit überwacht. Ist eine Fahrzeugkomponente des Fahrzeuggespanns 7 in ihrer Funktionsfähigkeit beeinträchtigt, verzögert die Bremssteuereinheit 30 die Fahrgeschwindigkeit des Fahrzeuggespanns 7 durch entsprechende Einstellung des Anhängerbremsdrucks P-A und betätigt hierzu das Anhänger-Drucksteuerventil 38.

Im vorliegenden Ausführungsbeispiel wird die Funktionsfähigkeit von Rädern 10, Radbremsen 13, Achsfederungen 39 sowie elektrischer Verbindungen 42 zwischen Zugfahrzeug 5 und Anhängefahrzeug 6 überwacht. Dazu werden die Messsignale 35 der Drehzahlsensoren 34 der Räder 10 herangezogen und die Drehzahl n der jeweiligen Räder 10 im Hinblick auf Funktionsbeeinträchtigung der Räder 10 selbst und/oder der jeweils zugeordneten Radbremsen 13 ausgewertet. Außerdem ist den Rädern 10 jeweils ein Reifendrucksensor 11 zugeordnet, dessen Messsignal 18 mit Aussage über den Reifendruck R zur Überwachung des Reifendrucks R ausgewertet wird. Darüber hinaus wird die Funktionsfähigkeit von Achsfederungen 39 überwacht. Hierzu ist der jeweils überwachten Achse 9 eine entsprechende Messeinrichtung zugeordnet, deren Messsignal 40 ausgewertet wird. Dabei kann die Überwachung der Funktionsfähigkeit an ausgewählten Rädern 10 oder Achsen 9 oder an allen Rädern 10 oder Achsen 8, 9 des Zugfahrzeugs 5 oder des Fahrzeuggespanns 7 erfolgen. Schließlich wird im gezeigten Ausführungsbeispiel die Funktionsfähigkeit der elektrischen Verbindung 42 zwischen dem Zugfahrzeug 5 und dem Anhängefahrzeug 6 durch Auswertung des Messsignals 41 einer der elektrischen Verbindung zugeordneten Messeinrichtung 43 überwacht.

Die Bremssteuereinheit 30 der Zugfahrzeugbremsanlage 3 und die Bremselektronik 31 der Anhängerbremsanlage 4 kommunizieren miteinander über eine elektrische Verbindung 42 zwischen den Fahrzeugen (Teilfahrzeugen) des Fahrzeuggespanns 7. Über die Verbindung 42 werden Überwachungsinformationen des Anhängefahrzeugs 6 im Zugfahrzeug 5 verfügbar gemacht, welche über ein Informationssignal 29 übertragen werden. Das Informationssignal 29 beinhaltet Information der Anhängerbremsanlage 4 mit Aussage beispielsweise über die Drehzahlen der Räder 10 des Anhängefahrzeugs 6 oder deren jeweiligen Schlupf, welche vom Antiblockiersystem 36 des Anhängefahrzeugs 6 bewertet werden. Die Information des Antiblockiersystems 36 des Anhängefahrzeugs 6 werden von der Bremssteuereinheit 30 des Zugfahrzeugs 5 für Zwecke der Bremskraftverteilung oder zur Einspeisung in Fahrerassistenzsysteme ausgewertet. Das Informationssignal 29 des Anhängefahrzeugs 6 wird zugleich für die Zwecke der erfindungsgemäßen Überwachung der Funktionsfähigkeit von Fahrzeugkomponenten des Anhängefahrzeugs 6 herangezogen.

Die Verzögerung des Fahrzeuggespanns 7 im Fall der Detektion 1 einer Beeinträchtigung der Funktionsfähigkeit einer für die Fahrsicherheit relevanten Fahrzeugkomponente wird in Fig. 2 verdeutlicht. Bei der Überwachung der Funktionsfähigkeiten werden im gezeigten Ausführungsbeispiel ausgewertet die Räderdrehzahlen n über die Messsignale 35 der Drehzahlsensoren 34, die Reifendrücke R an den Rädern 10 über die Messsignale 18 der jeweiligen Reifendrucksensoren 11, die Messsignale 40 der Messeinrichtungen an den Achsfederungen 39 mit Aussage über die Funktionsfähigkeit f1 der Achsfederung, sowie das Messsignal 41 der Messeinrichtung 43 an der elektrischen Verbindung 42 zwischen Zugfahrzeug 5 und Anhängefahrzeug 6 zur Erfassung der Funktionsfähigkeit f2 der elektrischen Verbindung 42.

Außerdem wird die Funktionsfähigkeit f3 des Lenkungssystems des Zugfahrzeugs überwacht. Hierzu erfasst die Detektion 1 das Messsignal eines Lenkradwinkelsensors 52.

Unter Heranziehung der Messsignale 35 der Drehzahlsensoren 34, der Messsignale 40 der Messeinrichtungen an den Achsfederungen 39 und von Daten eines Motorsteuergerätes 50 über die Antriebsleistung des Motors zur Ermittlung von Fahrzeugmassen, wird auch die Funktionsfähigkeit f4 der Radbremsen des Zugfahrzeugs überwacht. Das Motorsteuergerät 50 stellt der Bremssteuereinheit zur Detektion der Funktionsfähigkeit f4 der Radbremsen ein Informationssignal 51 bereit, welches die aktuelle Antriebsleistung des Motors mitteilt und mit dieser Größe die Ermittlung der Masse des Zugfahrzeugs ermöglicht. Dadurch kann rasches Nachlassen der Bremswirkung der Radbremsen des Zugfahrzeugs erkannt werden, sogenanntes Fading. In einem solchen Fall wird, bei ermittelter hoher Beladung des Zugfahrzeugs und nicht voll beladenem Anhängefahrzeug, durch Verzögerung des Fahrzeuggespanns über das Anhängefahrzeug der Eintritt kritischer Fahrsituationen verhindert.

Ergibt sich bei der Detektion 1 eine Beeinträchtigung der Funktionsfähigkeit einer Fahrzeugkomponente, so wird eine Verzögerung des Fahrzeuggespanns 7 durch Einstellung 44 eines entsprechenden Anhängerbremsdrucks P-A entsprechend der festgestellten Art und dem Umfang der Funktionsbeeinträchtigung eingeleitet. Gleichzeitig mit Einstellung eines Anhängerbremsdrucks P-A wird von der Bremssteuereinheit 30 an ein Motorsteuergerät ein Informationssignal herausgegeben mit dem Inhalt, dass temporär, solange das Informationssignal anliegt, vom Antriebsmotor (Motor) keine das Fahrzeug antreibende Kraft erzeugt werden soll.

Die Einstellung des Anhängerbremsdrucks P-A und die damit verbundene Verzögerung des Fahrzeuggespanns 7 durch Abbremsen des Anhängefahrzeugs 6 kann vom Fahrer des Fahrzeuggespanns 7 beeinflusst werden durch Betätigung des Fahrpedals 17 in einer festgelegten Weise, beispielsweise durch ein kurzes Durchtreten bis zum Vollanschlag des Fahrpedals 17. In diesem Fall wird eine Maximalgeschwindigkeit vM einer Regelung 2 vorgegeben und über die Einstellung 44 des Anhängerbremsdrucks P-A geregelt. Hierzu wird die aktuelle Fahrgeschwindigkeit v herangezogen und im Fall einer höheren Fahrgeschwindigkeit v als der Maximalgeschwindigkeit vM eine Verzögerung über den Anhängerbremsdruck P-A veranlasst. Die Regelung 2 der Fahrgeschwindigkeit v auf eine Maximalgeschwindigkeit vM ist durch Betätigung des Fahrpedals 17 aktivierbar. Der Wert der vorgegebenen Maximalgeschwindigkeit vM wird einem Kennfeldspeicher 37 entnommen, in welchem vorteilhafte Erfahrungswerte für jeweilige Fälle von Funktionsunfähigkeiten, beziehungsweise -einschränkungen bestimmter Fahrzeugkomponenten abgespeichert sind. Die Maximalgeschwindigkeit vM wird aus dem Kennfeldspeicher 37 entsprechend dem Ergebnis der Detektion 1 ausgelesen.

Die Höhe der Maximalgeschwindigkeit vM wird auf die bei der Detektion 1 ermittelte Funktionseinschränkung beziehungsweise den detektierten Fehler oder erkannte Fahrsituation (schnelle Autobahnfahrt) angepasst. Durch wiederholte Betätigung des Fahrpedals 17 wird die Vorgabe der Maximalgeschwindigkeit vM erhöht, so dass dem Fahrer nach seiner Einschätzung der Gefährdungssituation höhere Fahrgeschwindigkeiten nach seiner Wahl zur Verfügung stehen. Betätigt der Fahrer das Fahrpedal 17 also in kurzer Folge mehrfach nacheinander, wird davon abhängig die Sollgröße (Maximalgeschwindigkeit) vom Fahrer gewählt und über den Anhängerbremsdruck P-A und dem Antriebsmoment des Motors eingeregelt.

### Bezugszeichenliste (Bestandteil der Beschreibung)

- 1.: Detektion
- 2.: Regelung
- 3.: Zugfahrzeugbremsanlage
- 4.: Anhängerbremsanlage
- 5.: Zugfahrzeug
- 6.: Anhängefahrzeug
- 7.: Fahrzeuggespann
- 8.: Vorderachse
- 9.: Hinterachse
- 10.: Rad
- 11.: Reifendrucksensor
- 12.: Anhängerachse hinten
- 13.: Radbremse
- 14.: Anhängerachse vorn
- 15.: Bremspedal
- 16.: Betriebsbremsventil
- 17.: Fahrpedal
- 18.: Messsignal
- 19.: Erster Druckmittelvorrat
- 20.: Zweiter Druckmittelvorrat
- 21.: Erster Bremskreis
- 22.: Zweiter Bremskreis
- 23.: Kupplungskopf
- 24.: Anhänger-Kontrollventil
- 25.: Dritter Druckmittelvorrat
- 26.: Anhängerbremskreis
- 27.: Drucksteuerventil
- 28.: Steuersignal
- 29.: Informationssignal
- 30.: Bremssteuereinheit
- 31.: Bremselektronik
- 32.: Einlassventil
- 33.: Auslassventil
- 34.: Drehzahlsensor
- 35.: Messsignal
- 36.: Antiblockiersystem (ABS)
- 37.: Kennfeldspeicher
- 38.: Anhänger-Drucksteuerventil
- 39.: Achsfederung
- 40.: Messsignal
- 41.: Messsignal
- 42.: Elektrische Verbindung
- 43.: Messeinrichtung
- 44.: Einstellung Anhängerbremsdruck
- 45.: Vierter Bremskreis
- 46.: Vierter Druckmittelvorrat
- 47.: 3/2-Wege-Ventil
- 48.: Doppelrückschlagventil
- 49.: Bremsdruckleitung
- 50.: Motorsteuergerät
- 51.: Informationssignal
- 52.: Lenkradwinkelsensor
- P: Bremsdruck (einer Radbremse des Zugfahrzeugs)
- P-A: Anhängerbremsdruck
- P-AKV: Steuerbremsdruck
- vM: Maximalgeschwindigkeit
- v: Fahrgeschwindigkeit
- n: Drehzahl
- R: Reifendruck
- f1: Funktionsfähigkeit
- f2: Funktionsfähigkeit
- f3: Funktionsfähigkeit
- f4: Funktionsfähigkeit

## Patentansprüche

1. Verfahren zum Betrieb eines Fahrzeuggespanns (7) mit einem Zugfahrzeug (5) und wenigstens einem Anhängefahrzeug (6), wobei eine Bremssteuereinheit (30) einer Zugfahrzeugbremsanlage (3) das Bremsverhalten des Zugfahrzeugs (5) oder des Fahrzeuggespanns (7) überwacht und bedarfsweise den jeweiligen Bremsdruck (P) an den Radbremsen (13) des Zugfahrzeugs (5) sowie die Verzögerung des Anhängefahrzeugs (6) veranlasst, wobei mindestens eine Fahrzeugkomponente des Zugfahrzeugs (5) und/oder des Anhängefahrzeugs (6), welche als relevant für die Fahrsicherheit bestimmt ist, hinsichtlich ihrer Funktionsfähigkeit überwacht wird und die Bremssteuereinheit (30) der Zugfahrzeugbremsanlage (3) im Fall der Detektion (1) einer Einschränkung der Funktionsfähigkeit einer Fahrzeugkomponente das Fahrzeuggespann (7) über eine Anhängerbremsanlage (4) des Anhängefahrzeugs (6) verzögert, **dadurch gekennzeichnet, dass** die Bremssteuereinheit (30) nach Detektion (1) einer Funktionseinschränkung einer Fahrzeugkomponente eine für diesen Fall ermittelte oder vorgegebene Maximalgeschwindigkeit (vM) über Einstellung des Anhängerbremsdrucks (P-A) regelt (2).

2. Verfahren nach Anspruch 1, **dadurch gekennzeichnet, dass** die Bremssteuereinheit (30) der Zugfahrzeugbremsanlage (3) einen Anhängerbremsdruck (P-A) einstellt, mit dem die Bremswirkung der Anhängerbremsanlage (4) des Anhängefahrzeugs (6) gesteuert oder geregelt wird.

3. Verfahren nach Anspruch 1 oder 2, **dadurch gekennzeichnet, dass** die Regelung (2) der Fahrgeschwindigkeit (v) auf eine Maximalgeschwindigkeit (vM) vom Fahrer aktivierbar ist.

4. Verfahren nach Anspruch 1, 2 oder 3, **dadurch gekennzeichnet, dass** die Regelung (2) der Fahrgeschwindigkeit (v) auf eine Maximalgeschwindigkeit (vM) durch Betätigung des Fahrpedals (17) aktivierbar ist.

5. Verfahren nach einem der vorhergehenden Ansprüche, **dadurch gekennzeichnet, dass** die Maximalgeschwindigkeit (vM) durch wiederholte Betätigung des Fahrpedals (17) erhöht werden kann.

6. Verfahren nach einem der vorhergehenden Ansprüche, **dadurch gekennzeichnet, dass** zur Detektion (1) einer Funktionseinschränkung einer Fahrzeugkomponente die Drehzahl (n) der Räder (6) überwacht wird.

7. Verfahren nach einem der vorhergehenden Ansprüche, **dadurch gekennzeichnet, dass** zur Detektion (1) einer Funktionseinschränkung einer Fahrzeugkomponente der Reifendruck (R) von Fahrzeugrädern (6) überwacht wird.

8. Verfahren nach einem der vorhergehenden Ansprüche, **dadurch gekennzeichnet, dass** zur Detektion (1) einer Funktionseinschränkung einer Fahrzeugkomponente die Funktionsfähigkeit (f2) elektrischer Verbindungen (42) zwischen Zugfahrzeug (5) und Anhängefahrzeug (6) überwacht wird.

9. Verfahren nach einem der vorhergehenden Ansprüche, **dadurch gekennzeichnet, dass** zur Detektion (1) einer Funktionseinschränkung einer Fahrzeugkomponente die Funktionsfähigkeit (f1) von Achsfederungen (39) überwacht wird.

10. Verfahren nach einem der vorhergehenden Ansprüche, **dadurch gekennzeichnet, dass** zur Detektion (1) einer Funktionseinschränkung einer Fahrzeugkomponente die Funktionsfähigkeit (f3) des Lenkungssystems des Zugfahrzeugs (5) überwacht wird.

11. Verfahren nach einem der vorhergehenden Ansprüche, **dadurch gekennzeichnet, dass** zur Detektion (1) einer Funktionseinschränkung einer Fahrzeugkomponente die Funktionsfähigkeit (f4) der Radbremsen (13) des Zugfahrzeugs (5) überwacht wird.

12. Verfahren nach einem der vorhergehenden Ansprüche, **dadurch gekennzeichnet, dass** die Anhängerbremsanlage (4) ein Antiblockiersystem (36) aufweist.

## Claims

1. Method for operating a vehicle combination (7) comprising a towing vehicle (5) and at least one trailer vehicle (6), wherein a brake control unit (30) of a towing vehicle braking system (3) monitors the braking behavior of the towing vehicle (5) or of the vehicle combination (7) and, if necessary, brings about the relevant brake pressure (P) at the wheel brakes (13) of the towing vehicle (5) as well as the deceleration of the trailer vehicle (6), wherein at least one vehicle component of the towing vehicle (5) and/or of the trailer vehicle (6), which component is determined to be relevant for driving safety, is monitored with regard to its functionality and the brake control unit (30) of the towing vehicle braking system (3) decelerates the vehicle combination (7) via a trailer braking system (4) of the trailer vehicle (6) in the case where a restriction of the functionality of a vehicle component is detected (1), **characterized in that** after detecting (1) a functional restriction of a vehicle component the brake control unit (30) performs closed-loop control (2), by adjusting the trailer brake pressure (PA), of a maximum speed (vM) specified or ascertained for this case.

2. Method according to claim 1, **characterized in that** the brake control unit (30) of the towing vehicle braking system (3) adjusts a trailer brake pressure (P-A) with which the braking effect of the trailer braking system (4) of the trailer vehicle (6) is controlled in an open loop or a closed loop.

3. Method according to claim 1 or 2, **characterized in that** the closed-loop control (2) of the driving speed (v) to a maximum speed (vM) can be activated by the driver.

4. Method according to claim 1, 2 or 3, **characterized in that** the closed-loop control (2) of the driving speed (v) to a maximum speed (vM) can be activated by actuating the accelerator pedal (17).

5. Method according to any of the preceding claims, **characterized in that** the maximum speed (vM) can be increased by repeatedly actuating the accelerator pedal (17).

6. Method according to any of the preceding claims, **characterized in that** in order to detect (1) a functional restriction of a vehicle component the rotational speed (n) of the wheels (6) is monitored.

7. Method according to any of the preceding claims, **characterized in that** in order to detect (1) a functional restriction of a vehicle component the tire pressure (R) of vehicle wheels (6) is monitored.

8. Method according to any of the preceding claims, **characterized in that** in order to detect (1) a functional restriction of a vehicle component the functionality (f2) of electrical connections (42) between the towing vehicle (5) and the trailer vehicle (6) is monitored.

9. Method according to any of the preceding claims, **characterized in that** in order to detect (1) a functional restriction of a vehicle component the functionality (f1) of axle suspensions (39) is monitored.

10. Method according to any of the preceding claims, **characterized in that** in order to detect (1) a functional restriction of a vehicle component the functionality (f3) of the steering system of the towing vehicle (5) is monitored.

11. Method according to any of the preceding claims, **characterized in that** in order to detect (1) a functional restriction of a vehicle component the functionality (f4) of the wheel brakes (13) of the towing vehicle (5) is monitored.

12. Method according to any of the preceding claims, **characterized in that** the trailer braking system (4) has an anti-lock braking system (36).

## Revendications

1. Procédé permettant de faire fonctionner une combinaison de véhicules (7) comportant un véhicule tracteur (5) et au moins un véhicule remorqué (6), dans lequel une unité de commande de freinage (30) d'une installation de freinage de véhicule tracteur (3) surveille le comportement de freinage du véhicule tracteur (5) ou de la combinaison de véhicules (7) et provoque, si nécessaire, la pression de freinage (P) respective au niveau des freins de roues (13) du véhicule tracteur (5) ainsi que la décélération du véhicule remorqué (6), dans lequel au moins un composant du véhicule tracteur (5) et/ou du véhicule remorqué (6), lequel est déterminé comme important pour la sécurité de conduite, est surveillé par rapport à sa capacité de fonctionnement et l'unité de commande de freinage (30) de l'installation de freinage de véhicule tracteur (3), en cas de détection (1) d'une limitation de la capacité de fonctionnement d'un composant de véhicule, décélère la combinaison de véhicules (7) par l'intermédiaire d'une installation de freinage de remorque (4) du véhicule remorqué (6), **caractérisé en ce que** l'unité de commande de freinage (30), après détection (1) d'une limitation de fonctionnement d'un composant de véhicule, régule (2) une vitesse maximale (vM) déterminée ou prédéfinie pour ce cas en réglant la pression de freinage de remorque (P-A).

2. Procédé selon la revendication 1, **caractérisé en ce que** l'unité de commande de freinage (30) de l'installation de freinage de véhicule tracteur (3) règle une pression de freinage de remorque (P-A) avec laquelle l'effet de freinage de l'installation de freinage de remorque (4) du véhicule remorqué (6) est commandé ou régulé.

3. Procédé selon la revendication 1 ou 2, **caractérisé en ce que** la régulation (2) de la vitesse de déplacement (v) à une vitesse maximale (vM) peut être activée par le conducteur.

4. Procédé selon la revendication 1, 2 ou 3, **caractérisé en ce que** la régulation (2) de la vitesse de déplacement (v) à une vitesse maximale (vM) peut être activée en actionnant la pédale d'accélérateur (17).

5. Procédé selon l'une des revendications précédentes,
**caractérisé en ce que** la vitesse maximale (vM) peut être augmentée en actionnant de manière répétée la pédale d'accélérateur (17).

6. Procédé selon l'une des revendications précédentes,
**caractérisé en ce que,** pour la détection (1) d'une limitation de fonctionnement d'un composant de véhicule, la vitesse de rotation (n) des roues (6) est surveillée.

7. Procédé selon l'une des revendications précédentes, **caractérisé en ce que,** pour la détection (1) d'une limitation de fonctionnement d'un composant de véhicule, la pression de pneus (R) des roues de véhicule (6) est surveillée.

8. Procédé selon l'une des revendications précédentes, **caractérisé en ce que,** pour la détection (1) d'une limitation de fonctionnement d'un composant de véhicule, la capacité de fonctionnement (f2) des connexions électriques (42) entre le véhicule tracteur (5) et le véhicule remorqué (6) est surveillée.

9. Procédé selon l'une des revendications précédentes,
**caractérisé en ce que,** pour la détection (1) d'une limitation de fonctionnement d'un composant de véhicule, la capacité de fonctionnement (f1) de suspensions d'essieux (39) est surveillée.

10. Procédé selon l'une des revendications précédentes,
**caractérisé en ce que,** pour la détection (1) d'une limitation de fonctionnement d'un composant de véhicule, la capacité de fonctionnement (f3) du système de direction du véhicule tracteur (5) est surveillée.

11. Procédé selon l'une des revendications précédentes,
**caractérisé en ce que,** pour la détection (1) d'une limitation de fonctionnement d'un composant de véhicule, la capacité de fonctionnement (f4) des freins de roues (13) du véhicule tracteur (5) est surveillée.

12. Procédé selon l'une des revendications précédentes,
**caractérisé en ce que** l'installation de freinage de remorque (4) présente un antiblocage de sécurité (36).
